Europäisches Patentamt

European Patent Office

Office européen des brevets

(11) Publication number: **0 492 069 A1**

# EUROPEAN PATENT APPLICATION

(21) Application number: **91116976.1**

(22) Date of filing: **04.10.91**

(51) Int. Cl.⁵: **B29C 67/22**, B29C 35/08,
B29C 35/10, B29C 59/16

(30) Priority: **27.12.90 JP 407970/90**

(43) Date of publication of application:
**01.07.92 Bulletin 92/27**

(84) Designated Contracting States:
**DE ES GB IT**

(71) Applicant: **KINUGAWA RUBBER IND. CO., LTD.
330, Naganuma-cho
Chiba-City, Chiba Prefecture(JP)**

(72) Inventor: **Kameyama, Keitaro
330 Naganuma-cho
Chiba-City, Chiba Prefecture(JP)**

(74) Representative: **Weber, Joachim, Dr. et al
Hoefer, Schmitz, Weber, Patentanwälte
Ludwig-Ganghofer-Strasse 20
W-8022 Grünwald/München(DE)**

(54) **Process for manufacturing foamed rubber.**

(57) A process for manufacturing a foamed rubber material having a skin smoothed through electron beam irradiation, comprises the steps of, slightly foaming only a surface layer of an unvulcanized rubber material including at least a foaming agent, to a relatively low degree of foaming, performing electron beam irradiation onto the surface layer of the unvulcanized rubber material after the slightly foaming step, so as to form a cross-linked skin, and heating the unvulcanized rubber material after the electron beam irradiation step, so as to foam and vulcanize the unvulcanized rubber material.

# FIG.1

## BACKGROUND OF THE INVENTION

Field of the Invention

The present invention relates to a process for manufacturing an extrusion molded sponge rubber product which is applicable for weatherstrips, for example an automotive weatherstrip provided between a vehicular body and a door. Specifically to a manufacturing process for foamed rubber products having a skin cross-linked and hardened or cured by way of electron beam irradiation.

Description of the Background Art

Recently, there have been proposed and developed various manufacturing processes for foamed rubber products having a hardened skin by way of electron beam irradiation. One such foamed rubber manufacturing process has been disclosed in Japanese Patent First Publication (Tokkai) Showa 60-248747. In prior art foamed rubber manufacturing processes, unvulcanized rubber materials such as natural rubber, ethylene propylene rubber or the like, including foaming agents, have been pre-formed by extrusion molding or pressing. The pre-formed rubber material is subsequently processed by way of electron beam irradiation with a predetermined irradiation amount of 0.1 to 0.5 Mrad, and as a result a surface layer of the pre-formed rubber material is cross-linked and a hardened skin is formed thereon. Thereafter, the rubber material having the hardened skin is finally heated through a heating system, such as a hot-air vulcanization system or a hot-press vulcanization system. In this manner, the pre-formed rubber material is vulcanized and foamed via the final heating process.

As is generally known, in conventional sponge rubber manufacturing processes, when vulcanizing speed exceeds foaming speed, foaming occurs slowly after viscosity of the rubber material is adequately increased. This results in a relatively low expansion ratio of the rubber material. Conversely, when the foaming speed exceeds the vulcanizing speed, vulcanization occurs slowly after smooth development of foaming, thereby facilitating an optimal balance between foaming and vulcanization. In the former case, off-spec rubber products tend to be increased due to a change in the vulcanizing speed due to fluctuations in a mixing condition of unvulcanized rubber material compounded by a plurality of components or due to a change of density due to fluctuations in heating conditions. In the latter case, off-spec rubber products tend to be decreased as an optimal balance between vulcanization and foaming may be achieved. However, the latter case simultaneously introduces a problem in that it is difficult to form a smooth surface layer on the rubber material.

In the previously noted conventional process as described in Japanese Patent First Publication (Tokkai) Showa 60-248747, an unvulcanized rubber material including a foaming agent is heated and is then vulcanized and foamed after a cross-linked skin becomes pre-formed on the surface layer of the unvulcanized rubber material through electron beam irradiation with the above noted predetermined irradiation amount. The conventional process results in a smoothed skin on the foamed rubber, irrespective of vulcanizing and/or foaming speed, or the relationship between vulcanizing and foaming speed. That is, even if an unvulcanized rubber material has a vulcanizing speed less than a foaming speed, the conventional process employing electron beam irradiation can provide a foamed rubber product having a hardened and smoothed skin.

As set forth above, when electron beam irradiation is performed on an extrusion-molded rubber material, under atmospheric pressure at room temperature, in accordance with the conventional foamed rubber manufacturing process, the surface layer of the rubber material is smoothed, thereby assuring a high wear and abrasion resistance. However, if such an extrusion molded sponge rubber material having a hardened skin is used as an automotive weatherstrip disposed between the vehicle body and the door, for example, its sealing characteristics may be lowered due to a high compressive load caused by an undesirably hardened skin.

## SUMMARY OF THE INVENTION

It is, therefore, in view of the above disadvantages, an object of the present invention to provide an improved manufacturing process for a foamed rubber material having a skin hardened by way of electron beam irradiation, which can provide both high abrasion resistance and high sealing characteristics.

It is another object of the invention to provide an improved extrusion molded sponge rubber material suitable for weatherstripping, which can provide high durability and high sealing characteristics.

In order to accomplish the aforementioned and other objects, a process for manufacturing foamed rubber material having a skin smoothed through electron beam irradiation, comprises the steps of, slightly foaming only a surface layer of an unvulcanized rubber material including at least a foaming agent, applying electron beam irradiation onto the surface layer of the unvulcanized rubber material after the slightly foaming step, so as to form a cross-linked skin, and heating the unvulcanized rubber material after the electron beam irradiation step, so as to foam and vulcanize the unvulcanized rubber material. The slightly foaming step comprises preheating the unvulcanized rubber material, to a given degree such that the surface layer of the unvulcanized rubber material is foamed only to a relatively low degree. The preheating step is carried out while keeping the unvulcanized rubber material within a temperature range of 150°C ± 10°C. A microwave vulcanizer is utilized to achieve the preheating step, and a preheating temperature is essentially set to a foaming start temperature from which the unvulcanized rubber material starts to foam.

The electron beam irradiation step is carried out while exposing the surface layer of the unvulcanized rubber material to electron beam irradiation having an acceleration voltage of 175 kV and an irradiation amount of 1 to 50 Mrad. The electron beam irradiation amount may be preferably selected from a value in the range of 30 to 40 Mrad.

On the other hand, the heating step is carried out while keeping the unvulcanized rubber material at a temperature of 280°C for approximately 5 minutes. A hot-air circulation system is utilized to achieve the heating step.

The unvulcanized rubber material is preferably selected from ethylene propylene rubber including a high proportion of ethylene. The unvulcanized rubber material may include a mixture obtained by compounding the ethylene propylene rubber with other rubber materials being selected from among; natural rubber, styrene-butadiene rubber, butadiene rubber and isoprene rubber. The unvulcanized rubber material may include a reinforcing agent, a filler, a softening agent, an activator, a lubricant, a vulcanizing agent, foaming-auxiliaries, a foaming agent, a vulcanization accelerator, and vulcanization-auxiliaries. The composition of the unvulcanized rubber material is as follows:

| COMPONENT | PROPORTION(weight%) |
|---|---|
| ethylene propylene rubber with high proportion of ethylene | 48 |
| reinforcing agent(carbon black) | 28 |
| filler(calcium carbonate) | 5 |
| softening agent(oil) | 15 |
| foaming-auxiliaries | 0.3 |
| lubricant(stearic acid) | 0.2 |
| activator(zinc oxide) | 1.5 |
| foaming agent | 1.0 |
| vulcanization accelerator | 0.6 |
| vulcanizing agent(sulfur) | 0.6 |

## BRIEF DESCRIPTION OF THE DRAWINGS

Fig. 1 is a block diagram illustrating a first embodiment of a process for manufacturing a foamed rubber material having a hardened skin according to the invention.

Fig. 2 is a block diagram illustrating a second embodiment of a process for manufacturing a foamed rubber material having a hardened skin according to the invention.

## DESCRIPTION OF THE PREFERRED EMBODIMENTS

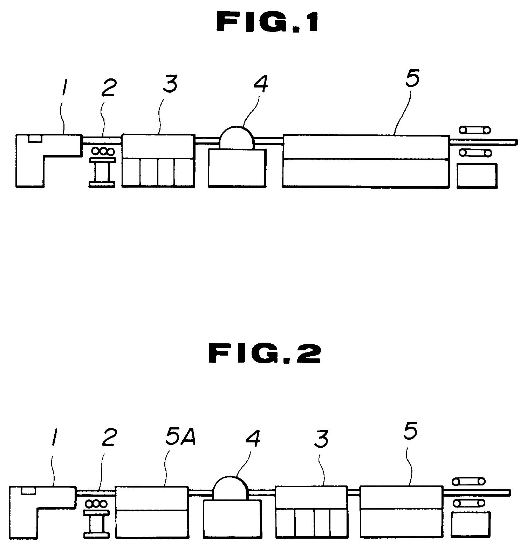

Referring now to the drawings, particularly to Fig. 1, an unvulcanized rubber material according to the present embodiment mainly comprises ethylene propylene rubber with a high proportion of ethylene component providing a high cross-linking bond. It is advantageous to utilize ethylene propylene rubber as weatherstripping, since the ethylene propylene rubber exhibits a superior weather-proof, ozone-proof, aging resistance, and heat resistance. The ethylene propylene rubber including a high proportion of ethylene may be replaced by a mixture obtained by blending the above noted ethylene propylene rubber with other rubber materials selected from among; natural rubber, styrene-butadiene rubber, butadiene rubber and isoprene rubber. The unvulcanized rubber material of the embodiment also includes carbon black acting as a reinforcing agent, calcium carbonate acting as a filler, oil acting as a softening agent, zinc oxide acting as an activator, stearic acid acting as a lubricant, sulfur acting as a vulcanizing agent, foaming-auxiliaries, a foaming agent, a vulcanization accelerator, and vulcanization-auxiliaries. The proportions of the above-described agents are suitably determined dependent upon various applications respectively requiring an inherent compressive rate and degree of foaming. As shown in Fig. 1, the unvulcanized rubber material is supplied to an extruder 1 after a main rubber material (ethylene propylene rubber), other rubber materials and various agents are precisely measured on the basis of a predetermined recipe suitable for a required application and blended by means of a mixer and a roller. The unvulcanized rubber material is extruded through the extruder 1 and pre-formed in a given dimension and geometry. The pre-formed unvulcanized rubber material 2 is fed to a microwave vulcanizer 3 which preheats the unvulcanized rubber material until its foaming start temperature, such as 150°C ± 10°C from which the unvulcanized rubber starts to foam. Thereafter, the preheated rubber material 2 is supplied into an electron beam irradiation system 4. Then, the slightly foamed surface layer is hardened by cross-linking bond to a lower degree when compared with the previously described conventional foamed rubber manufacturing process. In other words, the skin of the rubber material is slightly softened when compared with the conventional foamed rubber manufacturing process. Therefore, the foamed rubber product manufactured according to the process of the present invention exhibits a lower compressive load when compared with rubber products manufactured by the previously noted conventional process. In the electron beam irradiation process of the embodiment, an acceleration voltage is set at 175 kV and an electron beam irradiation amount is set within a given range of 1 to 50 Mrad. It is preferable to select an irradiation amount within a particular range of 30 to 40 Mrad, as hereinbelow described in detail in accordance with table 2. Although, in the preferred embodiment, electron beam irradiation is carried out in one direction, the electron beam irradiation may alternatively be carried out in a back and forth, or other suitable manner.

After the electron beam irradiation process, the rubber material 2 is supplied to a hot-air circulation system 5 through which the rubber material 2 is vulcanized and foamed for a predetermined heating time under a heating temperature higher than the vulcanizing and foaming temperatures, for example 280°C.Both heating time and heating temperature are suitably varied on the basis of application and environmental conditions, such as room temperature and humidity.

As will be appreciated from the above, a foamed rubber product manufactured according to the process of the present invention provides a smoothed and suitably hardened skin and thereby exhibits a high wear and abrasion resistance in addition to superior weather-proof, ozone-proof characteristics, aging resistance and heat resistance, and also exhibits high sealing characteristics when the foamed rubber product is utilized as weatherstripping, such as automotive weatherstrip provided between an outer panel of a vehicle body and a door.

The following table 1 indicates a composition or proportion of the unvulcanized rubber material 2 utilized in a foamed rubber product manufacturing process according to the invention.

4

EP 0 492 069 A1

TABLE 1

| COMPONENT | PROPORTION(weight%) |
|---|---|
| ethylene propylene rubber with high proportion of ethylene | 48 |
| reinforcing agent(carbon black) | 28 |
| filler(calcium carbonate) | 5 |
| softening agent(oil) | 15 |
| foaming-auxiliaries | 0.3 |
| lubricant(stearic acid) | 0.2 |
| activator(zinc oxide) | 1.5 |
| foaming agent | 1.0 |
| vulcanization accelerator | 0.6 |
| vulcanizing agent(sulfur) | 0.6 |

In the preferred embodiment, the unvulcanized rubber material having the composition as described in table 1 is blended by a mixer and a roller and supplied to the extruder 1 in such a manner as to be pre-formed in a predetermined dimension and geometry. According to the previously noted process or the present invention, the pre-formed rubber material is supplied to a microwave vulcanizer 3 at which the rubber material is preheated until substantially 150°C. Thereafter, the preheated rubber material is fed into an electron beam irradiation system 4 in which the rubber material is processed through electron beam irradiation under predetermined irradiation conditions wherein an acceleration voltage is set at 175 kV and an electron beam irradiation amount is set within a given range of 10 to 40 Mrad. The irradiated rubber material is supplied to a hot-air circulation system 5 at which the rubber material is heated again for approximately 5 minutes at a heating temperature of 280°C and foamed and vulcanized, with the result that a desirable extrusion-molded sponge rubber product is manufactured. The extrusion-molded sponge rubber product exhibits various characteristics, such as sealing characteristics, hardness and abrasion loss, as clearly described in table 2. The test data illustrated in table 2 was experimentally assured by the inventor of the present invention.

TABLE 2

|  | PRIOR ART | EMBODIMENT | | | |
|---|---|---|---|---|---|
|  |  | IRRADIATION AMOUNT(Mrad) | | | |
|  |  | 10 | 20 | 30 | 40 |
| specific gravity after foaming | 0.5 | 0.5 | 0.5 | 0.5 | 0.5 |
| rate of change of height($100^{O}C \times 22H$) | 20% | – | 15% | – | 10% |
| sealing characteristic | F | C | B | A | A |
| hardness | C | C | C | B | B |
| abrasion loss | 0.9g | 0.5g | 0.5g | 0.3g | 0.2g |

As to the sealing characteristic of table 2, characters A, B, C and F respectively designate excellent, fine, good and inferior sealing characteristics. On the other hand, as to hardness, C represents a harder state

5

than B, that is, B has a reasonable softness suitable for use as weatherstrip, for example. The rate of change of height relative to an initial height of an uncompressed test piece of a foamed rubber product represents a residual deformation measured under a particular condition in which a compressive load is applied to the test piece to a degree of 45% of its volume and the volumetrically compressed state is maintained for 22 hours at a temperature of 100ºC, and then the load is released for measuring change of height. The abrasion loss is obtained through a particular abrasion test at which a compressive load of 200g is applied through a frictional piece to a test piece of a foamed rubber product and the test piece is relatively moved 30 times over 1 minute while the two pieces are in contact with each other.

As appreciated from the test data described in table 2, it is preferable that the electron beam irradiation amount is kept within a range of 30 to 40 Mrad so as to assure both high sealing characteristics and high abrasion resistance.

Fig. 2 shows a second embodiment of a process for manufacturing a foamed rubber having a hardened skin. For the purpose of simplification of description, the same reference numerals used in the first embodiment shown in Fig. 1 will be applied to the corresponding elements used in the second embodiment shown in Fig. 2. Referring to Fig. 2, an additional hot-air circulation system 5A is utilized as a preheater. On the other hand, a microwave vulcanizer 3 is disposed between an electron beam irradiation system 4 and a hot-air circulation system 5 such that both the microwave vulcanizer 3 and the hot-air circulation system cooperatingly heat the unvulcanized rubber material so as to provide a foamed and vulcanized sponge rubber product. That is, the second embodiment is different from the first embodiment in that the microwave vulcanizer 3 is replaced with the additional hot-air circulation system 5A operating as a preheater and the hot-air circulation system 5 is cooperated with the microwave vulcanizer 3 as a heater for finishing vulcanization and foaming.

While the foregoing is a description of the preferred embodiments for carrying out the invention, it will be understood that the invention is not limited to the particular embodiments shown and described herein, but may include variations and modifications without departing from the scope or spirit of this invention as described by the following claims.

**Claims**

1. A process for manufacturing a foamed rubber material having a skin smoothed through electron beam irradiation, comprising the steps of:

   slightly foaming only a surface layer of an unvulcanized rubber material including at least a foaming agent;

   applying electron beam irradiation onto the surface layer of said unvulcanized rubber material after said slightly foaming step, so as to form a cross-linked skin; and

   heating said unvulcanized rubber material after said electron beam irradiation step, so as to foam and vulcanize said unvulcanized rubber material.

2. The process as set forth in claim 1, wherein said slightly foaming step comprises preheating said unvulcanized rubber material, to a given degree such that the surface layer of said unvulcanized rubber material is foamed only to a relatively low degree.

3. The process as set forth in claim 2, wherein said preheating step is carried out while keeping said unvulcanized rubber material within a temperature range of 150ºC ± 10ºC.

4. The process as set forth in claim 3, wherein a microwave vulcanizer is utilized to achieve said preheating step, and a preheating temperature is essentially set to a foaming start temperature from which said unvulcanized rubber material starts to foam.

5. The process as set forth in claim 1, wherein said electron beam irradiation step is carried out while exposing the surface layer of said unvulcanized rubber material to electron beam irradiation having an acceleration voltage of 175 kV and an irradiation amount of 1 to 50 Mrad.

6. The process as set forth in claim 5, wherein said electron beam irradiation amount is selected in a range of 30 to 40 Mrad.

7. The process as set forth in claim 1, wherein said heating step is carried out while keeping said unvulcanized rubber material at a temperature of 280ºC for approximately 5 minutes.

8. The process as set forth in claim 7, wherein a hot-air circulation system is utilized to achieve said heating step.

9. The process as set forth in claim 1, wherein said unvulcanized rubber material is selected from ethylene propylene rubber including a high proportion of ethylene or a mixture obtained by compounding said ethylene propylene rubber with other rubber materials being selected from the group consisting of; natural rubber, styrene-butadiene rubber, butadiene rubber and isoprene rubber.

10. The process as set forth in claim 9, wherein said unvulcanized rubber material includes a reinforcing agent, a filler, a softening agent, an activator, a lubricant, a vulcanizing agent, foaming-auxiliaries, a foaming agent, a vulcanization accelerator, and vulcanization-auxiliaries.

11. The process as set forth in claim 10, wherein the composition of said unvulcanized rubber material is as follows:

| COMPONENT | PROPORTION(weight%) |
| --- | --- |
| ethylene propylene rubber with high proportion of ethylene | 48 |
| reinforcing agent(carbon black) | 28 |
| filler(calcium carbonate) | 5 |
| softening agent(oil) | 15 |
| foaming-auxiliaries | 0.3 |
| lubricant(stearic acid) | 0.2 |
| activator(zinc oxide) | 1.5 |
| foaming agent | 1.0 |
| vulcanization accelerator | 0.6 |
| vulcanizing agent(sulfur) | 0.6 |

EP 0 492 069 A1

# FIG.1

# FIG.2

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 194 375 (SUMITOMO CHEMICAL)<br><br>* page 4, line 23 - line 31 *<br>* page 4, line 38 - page 5, line 2 *<br>* page 5, line 22 - line 24 *<br>* page 6, line 4 - line 6 *<br>* page 9, line 21 - line 7 *<br>* page 16, line 6 - line 23 *<br>--- | 1,5,6,<br>8-11 | B29C67/22<br>B29C35/08<br>B29C35/10<br>B29C59/16 |
| D,A | WORLD PATENTS INDEX LATEST<br>Derwent Publications Ltd., London, GB<br>AN 86-025667 [04], DW 8604<br>& JP-A-60248747 (SUMITOMO CHEMICAL)<br>--- | 1,5,6 | |
| A | WORLD PATENTS INDEX LATEST<br>Derwent Publications Ltd, London, GB<br>AN 83-725220 [31], DW 8331<br>& JP-A-58104726 (AISHIN SEIKI) 22 Jun 1983<br>--- | 1,5,6 | |
| A | WORLD PATENTS INDEX LATEST<br>Derwent Publications Ltd. London, GB<br>AN 90-258333 [34], DW 9034<br>& JP-A-2182427 (TORAY) 17 July 1990<br><br>----- | 1,2 | TECHNICAL FIELDS SEARCHED (Int. Cl.5)<br><br>B29C |

The present search report has been drawn up for all claims

| Place of search | Date of completion of the search | Examiner |
|---|---|---|
| THE HAGUE | 01 APRIL 1992 | PHILPOTT G. R. |

EPO FORM 1503 03.82 (P0401)